Europäisches Patentamt

European Patent Office

Office européen des brevets

(19)

(11) Publication number: **0 248 549 B1**

# EUROPEAN PATENT SPECIFICATION

(12)

(45) Date of publication of patent specification: **04.03.92**   (51) Int. Cl.$^5$: **G01V 7/00**

(21) Application number: **87304190.9**

(22) Date of filing: **12.05.87**

(54) Gravimetry logging.

(30) Priority: **30.05.86 US 868853**

(43) Date of publication of application:
**09.12.87 Bulletin 87/50**

(45) Publication of the grant of the patent:
**04.03.92 Bulletin 92/10**

(84) Designated Contracting States:
**DE FR GB NL**

(56) References cited:
**EP-A- 0 177 196**
**US-A- 3 038 338**
**US-A- 4 457 077**

**INSTRUMENTS AND EXPERIMENTAL TECH-
NIOUES, vol. 18, no. 4, part 2, July/August
1975, pages 1284-1285; A.G. SMAGIN: "A pre-
cision quartz gravimeter based on frequency
measurement"**

(73) Proprietor: **MOBIL OIL CORPORATION**
**150 East 42nd Street**
**New York New York 10017(US)**

(72) Inventor: **Lyle, W.D., Jr.**
**1314 Mockingbird Drive**
**Grapevine Texas 76051(US)**

(74) Representative: **Cooper, John Anthony et al**
**Mobil Court 3 Clements Inn**
**London WC2A 2EB(GB)**

Rank Xerox (UK) Business Services

EP 0 248 549 B1

EP 0 248 549 B1

**Description**

The present invention relates to a method and apparatus for the continuous logging of the gravity gradient along an earth formation.

In applications of formation gravity measurements, it is only the gravity gradient that is of interest since the gradient is related to the bulk density of the formation between the measurement stations according to well-known formulas. From this bulk density, estimates can be obtained of porosity and fluid saturation in the porous rocks of the formation. This gravity gradient has been determined by measuring the gravity difference of any two points along the formation and then dividing by the vertical distance separating the two points.

Current gravity technology measures gravity at discrete points along a formation by detecting motion of a small test mass in a gravity logging tool as the tool remains stationary. Small changes in gravitational acceleration cause this mass to move against the restoring force of a spring. Various approaches to the detection of this minute movement are possible. One such method is illustrated in detail in U.S. Patent No. 4,399,693, to L.S. Gournay. The general arrangement of a gravimetric exploration operation as well as a conventional LaCoste- and Romberg-type gravity meter of the mass-spring combination is shown in this Gournay patent. Also in the Gournay patent is the standard formula for computing formation bulk density from the gravity difference measurements. These gravity difference measurements must be made when the tool is motionless with respect to the formation. Such tool is not practical for making continuous measurements since there is no accurate means for eliminating the force on the test mass due to tool acceleration, and consequently, accurate gravity readings cannot be made with the tool in motion. This limitation requires that the gravity tool be stopped for a period of several minutes at each point or station along the formation at which a gravity difference measurement is desired. Another limitation is that the vertical resolution of the tool is only about 3.05 m (10 ft).

There is, therefore, a need to provide a method and apparatus for the continuous gravity which directly measures the variation of gravity gradient along a formation rather than gravity difference and which is insensitive to the effects of accelerations due to unsteady motions of the gravity logging tool.

In our EP-A-177196 there is described a method and system for conducting a continuous gravimetry survey of earth formations. The formation is continuously traversed with a gravity logging tool having a column of fluid within the tool. A first pressure difference is measured along a first interval within the column of fluid and a second pressure difference is measured along a second interval within the column of fluid. These first and second pressure difference measurements are subtracted to determine the gravity gradient between such first and second intervals. The first interval over which the first pressure difference is measured lies within an upper portion of the logging tool and the second interval over which the second pressure difference is measured lies within a lower portion of the logging tool. In an alternate embodiment, the first and second intervals overlap at least along a portion of the fluid column. The logging tool includes a container for the fluid column which maintains a constant pressure along the length of the column. Temperature is maintained constant along the column by an external heat absorber or a heat absorbing element located with the column itself. Baffles are located within the fluid column to prevent thermally driven convection. A sound absorber is also located within the fluid column to inhibit the transmission of acoustic waves. The fluid column is further shock-mounted to prevent acoustic waves from being excited within the column itself.

In Instruments and Experimental Techniques, volume 18, number 4, part 2, July/August 1975, pages 1284-1285, A.G. SMAGIN, "A Precision Quartz Gravimeter based on Frequency Measurement", there is described a method of determining the acceleration of gravity within $10^{-7} m/s^2$. The method is based on the fact that when subjected to the action of a massive body the trial body exerts a gravitationally dependent pressure on oscillating piezoelectric quartz and changes in resonant frequency. Based on the method described, a differential frequency gravitimeter is created which allows measurements of g to he performed within $4 \times 10^{-6} m/s^2$ with a digital output and automatic recording of the results of the measurements.

Acccording to one aspect of the invention, there is provided a method for conducting a gravimetry survey of an earth formation as defined in claim 1.

According to a further aspect of the invention, there is provided apparatus for conducting a gravimetry survey of an earth formation comprising the features of claim 2.

Further features of the invention are defined in the dependent claims.

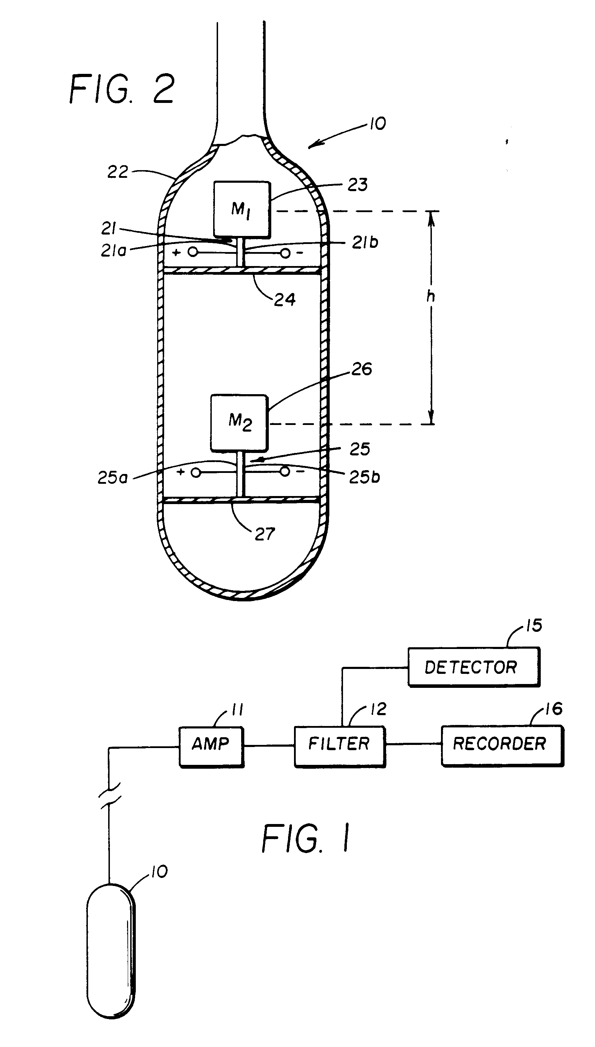

In the accompaning drawings, FIG. 1 illustrates a gravity logging system with which the gravity gradient measurement method of the present invention may be utilized, and FIGS. 2-4 illustrate alternate embodiments of the piezoelectric transducers utilized in the gravity logging system of FIG. 1 for making the gravity gradient measurements.

2

Referring now to FIG. 1, gravity gradient measurements are made by continuously moving a tool 10 along a borehole through a formation of interest. The gravimetric measurements are applied to an amplifier 11, a filter 12, difference detector 15, and a recorder 16 to produce a log of gravity gradient measurements as a function of tool location. The gravity measurements are coordinated with the depth of the tool in the borehole.

The gravity gradient measurements of the logging tool 10 are accomplished by the measurement of changes in the force exerted on one or more piezoelectric transducers contained within the logging tool from acceleration due to gravity and tool motion as the tool traverses the formation of interest. The basic principle involved is that a piezoelectric crystal, when electrically excited, exhibits a characteristic natural frequency of vibration that changes according to the force (i.e., compression or tension) applied to the crystal. The expression which relates the period of such vibration to such force is as follows:

$$F = \sum_{k=0}^{N} A_k (T_0/T)^k, \qquad (1)$$

where,

F = force applied to the piezoelectric transducer,

k = empirically determined modeling constant required to accurately relate force F to vibration periods T and $T_0$,

$A_k$ = coefficient based on temperature determined experimentally for the transducer,

$T_0$ = vibration period for zero force applied to the transducer, determined experimentally and based on temperature, and

T = vibration period for the force applied to the transducer due to the acceleration of gravity as the transducer is continuously moved along the formation.

The force F is expressed as:

$$F = Mg, \qquad (2)$$

where

M = known mass used to load the piezoelectric crystal, and

g = acceleration due to gravity.

A change in this force caused by a change in the acceleration due to gravity is expressed as:

$$\Delta F = M \Delta g, \qquad (3)$$

and can be measured by detecting the change %T in the period of vibration of the piezoelectric crystal.

FIG. 2 illustrates one embodiment of a gravity logging tool for detecting such $\Delta T$ changes in the period of vibration of a piezoelectric crystal so that a gravity gradient $\Delta g$ can be determined. A first piezoelectric crystal ($T_1$) 21 is vertically oriented with its lower end affixed to a horizontal support member 24 of the logging tool 10. Affixed to and supported by the upper end of the piezoelectric crystal 21 is a mass ($M_1$) 23 utilized for loading the crystal 21. The crystal is excited into resonance at a characteristic frequency of vibration by the application of opposite polarity electrical pulses to its opposite surfaces 21a and 21b. As the logging tool is moved through the borehole, the force applied to the piezoelectric crystal is as follows:

$$F_1 = M_1 g_1 - M_1 a = \sum_{k=0}^{N} A_k (T_{01}/T_1)^k \qquad (4)$$

where,

a = acceleration to the logging tool due to movement up the borehole.

In similar manner, a second piezoelectric crystal ($T_2$) 25 is vertically oriented with its lower end affixed to a further horizontal support member 27 of the logging tool 10. Affixed to and supported by the upper end of the piezoelectric crystal 25 is a mass ($M_2$) 26 for loading the crystal 25. The crystal is excited into resonance at a characteristic frequency of vibration by the application of opposite polarity electrical pulses to its opposite surfaces 25a and 25b. As the logging tool is moved through the borehole, the force applied to the piezoelectric crystal is as follows:

$$F_2 \;=\; M_2 g_2 \;-\; M_2 a \;=\; \sum_{k=0}^{N} B_k (T_{02}/T_2)^k \; . \qquad (5)$$

Differencing equations (4) and (5) to determine the change in force along the borehole between the two piezoelectric crystals 21 and 25 yields:

$$\Delta F \;=\; M_1 g_1 \,-\, M_2 g_2 \,+\, (M_1 - M_2)a, \text{ and} \qquad (6)$$

$$\Delta F \;=\; \sum_{k=0}^{N} [B_k (T_{02}/T_2)^k \,-\, A_k (T_{01}/T_1)^k, \qquad (7)$$

from which the gravity gradient $g_2 - g_1$ is determined:

$$\Delta g/h \;=\; (g_2 - g_1)/h, \qquad (8)$$

where $h$ = the distance separating the two piezoelectric crystals 21 and 25. This gradient is determined by the difference detector 15 of FIG. 1 from the differences in the measured periods of vibrations $T_{02}$ and $T_{01}$ of the piezoelectric crystals 25 and 21, respectively.

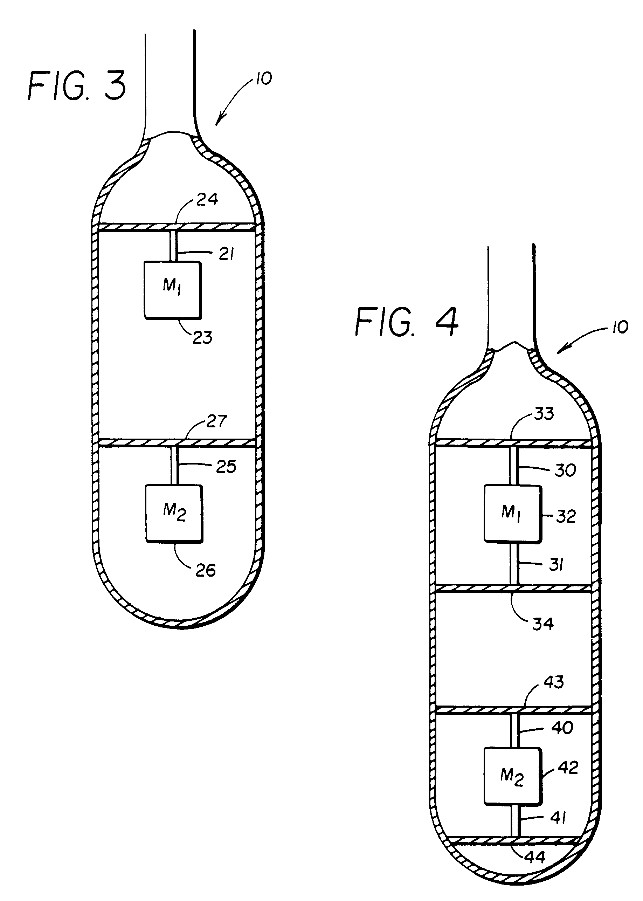

Alternate embodiments to that shown in FIG. 2 may be used in carrying out the gravity gradient measurement method of the present invention. As illustrated in FIG. 3, the piezoelectric crystals 21 and 25 may be vertically oriented with their upper ends affixed to horizontal support members 24 and 27, respectively, of logging tool 10. The masses ($M_1$) 23 and ($M_2$) 26 are then affixed to and suspended from the lower ends of piezoelectric crystals 21 and 25, respectively.

In the further alternate embodiment of FIG. 4, the piezoelectrical crystal 21 has been replaced by a pair of crystals 30 and 31, while the piezoelectric crystal 25 has been replaced by a pair of crystals 40 and 41. Piezoelectric crystal 30 is affixed at its upper end to horizontal support member 33, while piezoelectric crystal 31 is affixed at its lower end to horizontal support 34. Mass ($M_1$) 32 is affixed to and suspended from the lower end of crystal 30 and is also affixed to and supported by the upper end of crystal 31. In similar manner, the mass ($M_2$) 42 is affixed between piezoelectric crystals 40 and 41 which are, in turn, affixed to horizontal support members 43 and 44, respectively. In this configuration, the crystals 30 and 40 will be in states of compression when crystals 31 and 41 are in states of tension. Conversely, crystals 30 and 40 will be in states of tension when crystals 31 and 41 are in states of compression.

Apparatus for carrying out the method of the present invention may employ piezoelectric transducers of the type shown in U.S. Patent Nos. 3,470,400 and 3,479,536. Techniques for electrically exciting and measuring the period of vibration of the crystals used in such transducers are fully disclosed in such patents. The piezoelectric transducers are preferably of the quartz crystal type used by ParaScientific Company for use in pressure sensors. These transducers may be coupled with a Hewlett-Packard HP-5370B time interval counter for providing a desired frequency resolution. Interval counter may be coupled to a Hewlett-Packard HP 85 or similar minicomputer for determining differences in the periods of vibration between the piezoelectric transducer locations. Preferably, the distance $h$ between the piezoelectric transducer locations is about 1.5m (five feet).

It may be desirable to maintain a relatively constant temperature within the logging tool housing 22; however, corrections for the effects of small changes in temperature are easily made, if necessary. Temperature can be maintained reasonably constant by heating the column to a temperature greater than the expected maximum borehole temperature. Even better temperature control can be achieved by thermally insulating the column. This may be achieved by mounting it inside a vacuum flask. Still further, temperature control can be achieved by including a heat absorber within the housing. A very effective heat absorbing material is solid gallium which melts at about $31^{\circ}$ C ($87^{\circ}$ F).

**Claims**

4

1. A method for conducting a gravimetry survey of an earth formation, comprising the steps of:

a) continuously traversing said formation with a gravity logging tool (10) having at least two piezoelectric force transducers (21, 25) mounted at spaced apart axial positions within said tool,

b) exciting said piezoelectric transducers (21, 25) to vibrate at a characteristic resonant frequency,

c) measuring the periods of vibration of said piezoelectric transducers (21, 25) as said logging tool (10) continuously traverses said formation, said periods of vibration changing in response to the force exerted on said piezoelectric transducer (21, 25) by the acceleration of gravity and acceleration due to tool motion along said formation, characterised by:

d) determining the difference in the measured periods of vibration of said piezoelectric transducers (21, 25) compensated for temperature, and by relating force to said periods of vibration within said formation, in accordance with the following expression:

$$(g_2 - g_1) M = \sum_{k=0}^{N} [B_k (T_{02}/T_2)^k - A_k (T_{01}/T_1)^k ]$$

where:

$g_1$ = gravity at a first of said pair of piezoelectric force transducers,

$g_2$ = gravity at a second of said pair of piezoelectric force transducers,

M = mass associated with each of said transducers,

k = empirically determined modeling coefficient relating force F to vibration period,

$T_0$ = vibration period for zero force applied to said transducers,

T = vibration period for the force applied to said transducers due to the acceleration of gravity as said transducers are continuously moved along the formation, and

$A_k$ and $B_k$ = coefficient constants based on temperature determined experimentally for each of said transducers.

2. Apparatus for conducting a gravimetry survey of an earth formation, comprising:

a) a gravity logging tool (10),

b) first and second piezoelectric transducers (21, 25) located at spaced-apart axial positions within said logging tool (10),

c) means for electrically exciting each of said first and second piezoelectric transducers to vibrate at a characteristic resonant frequency,

d) means for measuring the periods of vibration of each of said first and second piezoelectric transducers as the logging tool continuously traverses said earth formation, characterised in that,

e) first and second masses (23, 26) are affixed to said first and second piezoelectric transducers (21, 25), respectively, for loading said transducers,

f) said periods of vibration of said first and second transducers change in response to the force exerted on said transducers by the effect of the acceleration of gravity on said first and second masses as said logging tool continuously traverses said formation, and

g) means is provided for determining the difference in said measured periods of vibration of said first and second piezoelectric transducers as a continuous measure of the gravity gradient within said formation compensated for temperature, and for relating force to said periods of vibration within said formation in accordance with the following expression

$$F = \sum_{k=0,}^{N} A_k (T_0/T)^k ,$$

where:

F = force applied to the piezoelectric transducer,

$A_k$ = experimentally determined modelling coefficients dependent on temperature that relate F to vibration periods T and To,

To = vibration period for zero force applied to the transducer determined experimentally and

EP 0 248 549 B1

based on temperature

T = vibration period for the force applied to the transducer due to the acceleration of gravity as the transducer is continuously mover through the borehole

3. The apparatus of claim 2 wherein:

a) said first piezoelectric (21) transducer comprises a first piezoelectric crystal (21) that is affixed at one end to said logging tool (10) and is affixed at its opposite end to said first mass (23), said first mass (23) being thereby isolated from contact with said logging tool (10) by said first piezoelectric crystal (21), and

b) said second piezoelectric transducer (25) comprises a second piezoelectric crystal (25) that is affixed at one end to said logging tool and is affixed at its opposite end to said second mass (26), said second mass (26) being thereby isolated from contact with said logging tool (10) by said second piezoelectric crystal (25).

4. The apparatus of claim 3, wherein:

a) said first piezoelectric transducer (21) comprises first and second piezoelectric crystals (30, 31) oriented vertically within said logging tool (10) at spaced-apart positions along the axis of said logging tool (10),

b) said first piezoelectric crystal (30) is affixed at its upper end to said logging tool (10),

c) said second piezoelectric crystal (31) is affixed at its lower end to said logging tool (10),

d) said first mass (32) is affixed between the lower end of said first piezoelectric crystal (30) and the upper end of said second piezoelectric crystal (31), whereby one of said first and second piezoelectric crystals (30, 31) is in a state of compression, while the other of said first and second piezoelectric crystals (30, 31) is simultaneously in a state of tension,

e) said second piezoelectric transducer (25) comprises third and fourth piezoelectric crystals (40, 41) oriented vertically within said logging tool (10) at spaced-apart positions along the axis of said logging tool (10),

f) said third piezoelectric crystal (40) is affixed at its upper end to said logging tool (10),

g) said fourth piezoelectric crystal (41) is affixed at its lower end to said logging tool (10), and

h) said second mass (42) is affixed between the lower end of said third piezoelectric crystal (40) and the upper end of said fourth piezoelectric crystal (41), whereby one of said third and fourth piezoelectric crystals (40, 41) is in a state of compression, while the other of said third and fourth piezoelectric crystals (40, 41) is simultaneously in a state of tension.

**Revendications**

1. Procédé d'étude gravimétrique d'une formation géologique comprenant les étapes suivantes consistant à:

a) faire traverser en continu ladite formation par un outil de mesure de gravité (10) renfermant au moins deux transducteurs de force piézoélectriques (21, 25) montés dans des positions axiales séparées l'une de l'autre à l'intérieur dudit outil;

b) exciter lesdits transducteurs piézoélectriques (21, 25) pour qu'ils vibrent à une fréquence de résonnance caractéristique;

c) mesurer les périodes de vibration desdits transducteurs piézoélectriques (21, 25) lorsque ledit outil de mesure (10) traverse en continu ladite formation, lesdites périodes de vibration changeant en fonction de la force exercée sur lesdits transducteurs piézoélectriques (21, 25) par l'accélération de la pesanteur et l'accélération due aux mouvements de l'outil le long de ladite formation,

caractérisé par l'étape consistant à:

d) déterminer la différence dans les périodes mesurées de vibration desdits transducteurs piézoélectriques (21, 25) compensées des variations de température et à corréler la force auxdites périodes de vibration au sein de ladite formation conformément à l'expression suivante:

$$(g_2 - g_1) M = \sum_{k=0}^{N} [B_k(T_{O2}/T_2)^k - A_k(T_{O1}/T_1)^k]$$

dans laquelle:

6

$g_1$ = gravité au niveau d'un premier transducteur de ladite paire de transducteurs piézoélectriques;

$g_2$ = gravité au niveau d'un second transducteur de ladite paire de transducteurs piézoélectriques;

M = masse associée à chacun desdits transducteurs;

k = coefficient de modélisation déterminé empiriquement et reliant la force F à la période de vibration;

$T_o$ = période de vibration pour une force nulle appliquée sur lesdits transducteurs,

T = période de vibration pour la force appliquée auxdits transducteurs due à l'accélération de la pesanteur lorsque lesdits transducteurs se déplacent continuellement le long de la formation, et

$A_k$ et $B_k$ = coefficients constants basés sur la température et déterminés expérimentalement pour chacun desdits transducteurs.

2. Dispositif d'étude gravimétrique d'une formation géologique comprenant:

a) un outil (10) de mesure de gravité;

b) un premier et un second transducteurs piézoélectriques (21, 25) disposés dans des positions axiales espacées l'une de l'autre à l'intérieur dudit outil de mesure (10),

c) des moyens pour exciter électriquement chacun desdits premier et second transducteurs piézoélectriques pour les faire vibrer à une fréquence de résonnance caractéristique;

d) des moyens pour mesurer des périodes de vibration de chacun desdits premier et second transducteurs piézoélectriques lorsque l'outil de mesure traverse en continu ladite formation géologique,

caractérisé en ce que:

e) une première et une seconde masses (23, 26) sont fixées respectivement audit premier et audit second transducteurs piézoélectriques (21, 25) pour charger lesdits transducteurs;

f) lesdites périodes de vibration desdits premier et second transducteurs varient en fonction de la force exercée sur lesdits transducteurs par l'effet de l'accélération de la pesanteur sur lesdites première et seconde masses lorsque ledit outil de mesure traverse, en continu, ladite formation; et en ce que

g) des moyens sont prévus pour déterminer la différence entre lesdites périodes de vibration mesurées dudit premier et dudit second transducteurs piézoélectriques sous la forme d'une mesure en continu du gradient de gravité au sein de ladite formation, compensée des variations de température, et pour corréler ladite force auxdites périodes de vibration au sein de ladite formation conformément à l'expression suivante:

$$F = \sum_{k=0}^{N} A_k (T_O/T)^k$$

dans laquelle:

F = force appliquée sur le transducteur piézoélectrique,

$A_k$ = coefficients de modélisation déterminés expérimentalement et dépendant de la température, qui relient la force F aux périodes de vibration T et $T_o$,

$T_o$ = période de vibration pour une force nulle appliquée sur le transducteur, déterminée expérimentalement et basée sur la température; et

T = période de vibration pour la force appliquée sur le transducteur du fait de l'accélération de la pesanteur lorsque le transducteur se déplace en continu à travers le trou de forage.

3. Dispositif selon la revendication 2, caractérisé en ce que:

a) ledit premier transducteur piézoélectrique (21) comprend un premier cristal piézoélectrique (21) qui est fixé par une extrémité audit outil de mesure (10) et qui est fixé par son extrémité opposée à ladite première masse (23), ladite première masse (23) étant ainsi séparée dudit outil de forage (10) par ledit premier cristal piézoélectrique (21); et

b) ledit second transducteur piézoélectrique (25) comprend un second cristal piézoélectrique (25) qui est fixé par une de ses extrémités audit outil de forage (10) qui est fixé par son extrémité opposée à ladite seconde masse (26), ladite seconde masse (26) étant ainsi séparée dudit outil de mesure (10) par ledit second cristal piézoélectrique (25).

4. Dispositif selon la revendication 3, caractérisé en ce que:

a) ledit premier transducteur piézoélectrique (21) comprend un premier et un second cristal piézoélectrique (30, 31) orientés verticalement au sein dudit outil de mesure (10) en des endroits espacés l'un de l'autre le long de l'axe dudit outil de mesure (10);

b) ledit premier cristal piézoélectrique (30) est fixé par son extrémité supérieure audit outil de mesure (10);

c) ledit second cristal piézoélectrique (31) est fixé par son extrémité inférieure audit outil de mesure (10);

d) ladite première masse (32) est fixée entre l'extrémité inférieure dudit premier cristal piézoélectrique (30) et l'extrémité supérieure dudit second cristal piézoélectrique (31), l'un desdits premier et second cristaux piézoélectriques (30, 31) étant ainsi en étant de compression lorsque l'autre desdits premier et second cristaux piézoélectriques (30, 31) est simultanément en état de tension;

e) ledit second transducteur piézoélectrique (25) comprend un troisième cristal et un quatrième cristal piézoélectriques (40, 41), orientés verticalement au sein dudit outil de mesure (10) en des positions espacées l'une de l'autre le long de l'axe dudit outil de mesure (10);

f) ledit troisième cristal piézoélectrique (40) est fixé par son extrémité supérieure audit outil de mesure (10);

g) ledit quatrième cristal piézoélectrique (41) est fixé par son extrémité inférieure audit outil de mesure (10); et

h) ladite masse (42) est fixée entre l'extrémité inférieure audit troisième cristal piézoélectrique (40) et l'extrémité supérieure dudit quatrième cristal piézoélectrique (41), l'un desdits troisième et quatrième cristaux étant ainsi en état de compression lorsque l'autre desdits troisième et quatrième cristaux piézoélectriques (40, 41) est simultanément en état de tension.

**Patentansprüche**

1. Verfahren zur Durchführung einer gravimetrischen Vermessung eienr Erdformation, welches die Schritte umfaßt:

a) kontinuierliche Durchquerung der Formation mit einem Gravitations-Bohrlochmeßinstrument (10), das mindestens zwei piezoelektrische Kraftaufnehmer (21, 25) aufweist, die in räumlich voneinander getrennten axialen Positionen innerhalb des Instruments befestigt sind,

b) Anregung der piezoelektrischen Aufnehmer (21, 25), so daß sie mit einer charakteristischen Resonanzfrequenz schwingen,

c) Messen der Schwingungsperioden der piezoelektrischen Aufnehmer (21, 25), wenn das Bohrlochmeßinstrument (10) die Formation kontinuierlich durchquert, wobei sich die Schwingungsperioden als Folge der Kraft ändern, die durch den Anstieg der Gravitation und die Beschleunigung aufgrund der Instrumentbewegung entlang der Formation auf den piezoelektrischen Aufnehmer (21, 25) ausgeübt wird, gekennzeichnet durch

d) Bestimmung des Unterschieds der gemessenen Schwingungsperioden der piezoelektrischen Aufnehmer (21, 25), wobei die Temperatur kompensiert wurde, und indem die Kraft mit den Schwingungsperioden innerhalb der Formation entsprechend der folgenden Gleichung in Zusammenhang gebracht wird:

$$(g_2 - g_1) \, M \; = \; \sum_{k \, = \, 0}^{N} \; [B_k (T_{02}/T_2)^k - A_k (T_{01}/T_1)^k \, ]$$

worin:

$g_1$ = Gravitation am ersten piezoelektrischen Kraftaufnehmer dieses Paares  
$g_2$ = Gravitation am zweiten piezoelektrischen Kraftaufnehmer dieses Paares  
M = Masse, die zu jedem Aufnehmer gehört  
k = empirisch bestimmter Modellkoeffizient, der die Kraft F mit der Schwingungsperiode in Zusammenhang setzt

$T_o$    = Schwingungsperiode, wenn auf die Aufnehmer keine Kraft ausgeübt wird

T    = Schwingungsperiode für die Kraft, die aufgrund des Anstiegs der Gravitation auf die Aufnehmer ausgeübt wird, wenn die Aufnehmer kontinuierlich entlang der Formation bewegt werden, und

$A_k$ und $B_k$    = Koeffizientkonstanten, die auf der Temperatur basieren, die experimentell für jeden der Aufnehmer bestimmt wurde.

2.    Vorichtung zur Durchführung einer gravimetrischen Vermessung einer Erdformation, welche umfaßt:

a) ein Gravitations-Bohrlochmeßinstrument (10),

b) erste und zweite piezoelektrische Aufnehmer (21, 25), die in räumlich getrennten axialen Positionen innerhalb des Bohrlochmeßinstruments (10) angeordnet sind,

c) eine Einrichtung zur elektrischen Anregung jedes der ersten und zweiten piezoelektrischen Aufnehmer, so daß sie mit einer charakterisitschen Resonanzfrequenz schwingen,

d) eine Einrichtung zur Messung der Schwingungsperioden jedes ersten und zweiten piezoelektrischen Aufnehmers, wenn das Bohrlochmeßinstrument die Erdformation kontinuierlich durchquert, dadurch gekennzeichnet, daß

e) eine erste und eine zweite Masse (23, 26) mit dem ersten bzw. zweiten piezoelektrischen Aufnehmer (21, 25) verbunden sind, um diese Aufnehmer zu belasten,

f) sich die Schwingungsperioden des ersten und zweiten Aufnehmers als Folge der Kraft ändern, die durch die Beschleunigungswirkung der Gravitation auf die erste und zweite Masse auf die Aufnehmer ausgeübt wird, wenn das Bohrlochmeßinstrument die Formation kontinuierlich durchquert, und

g) eine Einrichtung vorgesehen ist, um den Unterschied der gemessenen Schwingungsperioden des ersten und zweiten piezoelektrischen Aufnehmers als kontinuierliche Maßnahme des Gravitationsgradienten innerhalb der Formation zu bestimmen, wobei die Temperatur kompensiert wurde, und um die Kraft mit den Schwingungsperioden in der Formation entsprechend der folgenden Gleichung in Zusammenhang zu setzen:

$$F = \sum_{k=0,}^{N} A_k \, (T_o/T)^k,$$

worin:

F    = die auf den piezoelektrischen Aufnehmer ausgeübte Kraft,

$A_k$    = experimentell bestimmte Modellkoeffizienten, in Abhängigkeit von der Temperatur, die F mit den Schwingungsperioden T und To in Zusammenhang bringen

To    = Schwingungsperiode, wenn auf den Aufnehmer keine Kraft ausgeübt wird, experimentell bestimmt und auf die Temperatur bezogen und

T    = Schwingungsperiode für die Kraft, die durch den Anstieg der Gravitation auf den Aufnehmer ausgeübt wird, wenn der Aufnehmer kontinuierlich durch das Bohrloch bewegt wird.

3.    Vorrichtung nach Anspruch 2, worin:

a) der erste piezoelektrische Aufnehmer (21) einen ersten piezoelektrischen Kristall (21) umfaßt, der an einem Ende an das Bohrlochmeßinstrument (10) und am entgegengesetzten Ende an die erste Masse (23) angebracht ist, wodurch die erste Masse (23) durch den ersten piezoelektrischen Kristall (21) vor einem Kontakt mit dem Bohrlochmeßinstrument (10) isoliert ist, und

b) der zweite piezoelektrische Aufnehmer (25) einen zweiten piezoelektrischen Kristall (25) umfaßt, der an einem Ende an das Bohrlochmeßinstrument und am entgegengesetzten Ende an die zweite Masse (26) angebracht ist, wodurch die zweite Masse (26) durch diesen zweiten piezoelektrischen Kristall (25) vor einem Kontakt mit dem Bohrlochmeßinstrument (10) isoliert ist.

4.    Vorrichtung nach Anspruch 3, worin:

a) der erste piezoelektrische Aufnehmer (21) einen ersten und einen zweiten piezoelektrischen Kristall (30, 31) umfaßt, die senkrecht innerhalb des Bohrlochmeßinstruments (10) in räumlich getrennten Positionen entlang der Achse des Bohrlochmeßinstruments (10) orientiert sind,

b) der erste piezoelektrische Kristall (30) an seinem oberen Ende an das Bohrlochmeßinstrument (10) angebracht ist,

c) der zweite piezoelektsiche Kristall (31) an seinem unteren Ende an das Bohrlochmeßinstrument (10) angebracht ist,

d) die erste Masse (32) zwischen dem unteren Ende des ersten piezoelektrischen Kristalls und dem oberen Ende des zweiten piezoelektrischen Kristalls (31) befestigt ist, wodurch einer der ersten und zweiten piezoelektrischen Kristalle (30, 31) in einem Zustand der Kompression ist, wohingegen der andere der ersten und zweiten piezoelektrischen Kristalle (30, 31) gleichzeitig in einem Zustand der Spannung ist,

e) der zweite piezoelektrische Aufnehmer (25) einen dritten und einen vierten piezoelekrtischen Kristall (40m, 41) umfaßt, die vertikal innerhalb des Bohrlochmeßinstruments (10) in räumlich getrennten Positionen entlang der Achse des Bohrlochmeßinstruments (10) orientiert sind,

f) der dritte piezoelektrische Kristall (40) an seinem oberen Ende an das Bohrlochmeßinstrument (10) angebracht ist,

g) der vierte piezoelektrische Kristall (41) an seinem unteren Ende an das Bohrlochmeßinstrument (10) angebracht ist und

h) die zweite Masse (42) zwischen dem unteren Ende des dritten piezoelektrischen Kristalls (40) und dem oberen Ende des vierten piezoelektrischen Kristalls (41) befestigt ist, wodurch einer der dritten und vierten piezoelektrischen Kristalle (40, 41) im Zustand der Kompression ist, wohingegen der andere der dritten und vierten piezoelektrischen Kristalle (40, 41) gleichzeitig im Zustand einer Spannung ist.

FIG. 2

FIG. 1

FIG. 3

FIG. 4